# EUROPEAN PATENT SPECIFICATION

(11) **EP 3 233 984 B1**
(45) Date of publication and mention of the grant of the patent: **18.08.2021**
(21) Application number: 15826235.2
(22) Date of filing: 18.12.2015
(51) Int. Cl.: C08L 67/04, C08J 5/18, D01D 5/30

(54) **EXTRUDABLE POLYLACTIC ACID COMPOSITION AND METHOD OF MAKING MOLDED ARTICLES UTILIZING THE SAME**
EXTRUDIERBARE POLYMILCHSÄUREZUSAMMENSETZUNG UND VERFAHREN ZUR HERSTELLUNG VON FORMKÖRPERN DAMIT
COMPOSITION D'ACIDE POLYLACTIQUE EXTRUDABLE ET PROCÉDÉ DE PRODUCTION D'ARTICLES MOULÉS L'UTILISANT

(30) Priority: 19.12.2014 US 201462094404 P; 07.04.2015 US 201562143972 P; 17.12.2015 US 201514972637
(43) Date of publication of application: 25.10.2017
(73) Proprietor: Earth Renewable Technologies, Brevard, North Carolina 28712 (US)
(72) Inventor: WOLFE, Thomas Jason, Brevard, North Carolina 28712 (US); MITCHELL, Melvin Glenn, Penrose, North Carolina 28766 (US); BRANDENBURG, James Etson, JR., Brevard, North Carolina 28712 (US)
(74) Representative: Gibbs, Richard
(86) International application number: PCT/US2015/066562
(87) International publication number: WO 2016/100764

(56) References cited:
- EP-A1- 2 186 846
- WO-A1-2007/107906
- US-A1- 2014 087 108
- None

## Description

### CROSS-RELATED APPLICATION DATA

This application claims priority to U.S. Provisional Application serial number 62/094,404; filed December 19, 2014 and U.S. Provisional Application serial number 62/143,972; filed April 7, 2015.

### FIELD OF THE INVENTION

The present invention relates to an extrudable polylactic acid composition having improved melt viscosity, temperature stability, tensile strength, and impact resistance and a method of making molded articles therefrom. The polylactic acid polymer may be derived from a renewable resource and the overall extrudable polylactic acid composition may be biodegradable.

### BACKGROUND OF THE INVENTION

Molded articles are typically formed from various extrudable polymer compositions and exemplary articles of manufacture include bottles and other food containers, films, packaging, and the like. In the past such molded articles were formed from petroleum-based polymers which typically are neither derived from a renewable resource nor biodegradable. Exemplary petroleum-based polymers include polypropylene (PP), polyethylene terephthalate (PET), polystyrene (PS), HDPE and polyvinylchloride (PVC). Such petroleum-based polymers not only are environmentally unfriendly but the solvents and methods for making such polymers are also environmentally unfriendly. Moreover although some of these polymers may be recyclable, they are not biodegradable and pose problems in landfills and the like.

A solution to this problem is to form molded articles from a polymer that is derived from a renewable resource. An example of such a polymer that is derived from a renewable resource is polylactic acid (PLA). PLA is derived from various natural renewable resource material such as corn, plant starches (e.g., potatoes), and canes (e.g., sugar cane). Such efforts to utilize PLA are described in, for example, U.S. Publication Nos. 2011/005847A1 and 2010/0105835A1, US 2014/0087108 A1, PCT Publication No. WO 2007/047999A1, and U.S. Patent Nos., 5,744,510, 6,150,438, 6,756,428, and 6,869,985. For purposes of this disclosure, the term 'lactide-based polymer' is intended to by synonymous with the terms polylactide, polylactic acid (PLA) and polylactide polymer, and is intended to include any polymer formed via the ring opening polymerization of lactide monomers, either alone (i.e., homopolymer) or in mixture or copolymer with other monomers. The term is also intended to encompass any different configuration and arrangement of the constituent monomers (such as syndiotactic, isotactic, amorphosis, crystalline, partially crystalline, and the like). The lactide-based polymer may or may not be derived from a renewable resource.

PLA is formed by the ring-opening polymerization of lactide. PLA is a crystalline polymer and thus has challenges when molding with respect to melt viscosity, temperature stability, tensile strength, and impact resistance. Attempts have been made to utilize PLA in blow molding processes particularly injection stretch blow molding (ISBM) processes. PLA, however, is known to be brittle and exhibit low toughness resulting in low impact strength. Therefore there continues to be a desire for improved extrudable PLA compositions that are more environmentally friendly, i.e., are derived from renewable resources and are biodegradable and/or compostable, and overcome the process challenges relating to molding articles using PLA.

### SUMMARY OF THE INVENTION

To this end, the present invention provides an extrudable PLA composition comprising polylactic acid (PLA) and a bicomponent fiber comprising a low melt temperature component and a high melt temperature component, according to the appended claims. The low melt temperature component and the high melt temperature component are preferably naturally derived polymers, namely are derived from a renewable resource such as a plant (i.e., plant-based) as compared to polymers derived from oil, i.e., a petroleum-based polymer. Such naturally-derived plant-based polymers may be biodegradable or may be compostable, or may be both..

The extrudable PLA composition may have a heat deflection temperature of greater than about 52°C, often greater than about 70°C and sometimes greater than about 100°C, and a melt temperature between about 153°C and about 230°C.

The extrudable PLA composition may comprise about 60 to about 99.8 percent polylactic acid and about 0.1 to about 20 percent bicomponent fiber comprising an island-in-the-sea structure comprising high density polyethylene as the sea and stereocomplex polylactic acid or bio-polyethylene terephthalate as the island. Optionally, natural oil, fatty acid, fatty acid ester, wax or waxy esters, cyclodextrin, nanofibers, crystallinity agents, glass agents, starch-based rheology agents, colorants or pigments, and other additives may be included. Also disclosed herein is a method of forming molded articles from such an extrudable PLA composition.

In another aspect of the invention, provided is a container formed from the above extrudable PLA composition of the invention.

In still another aspect of the invention, provided is a closure, cap or lid for a container formed from an extrudable PLA composition of the invention.

Also disclosed herein is a method of forming molded articles comprising forming a mixture of the extrudable PLA composition of the invention, drying the mixture to a moisture level of less than about 150 ppm, often less than about 100 ppm and sometimes less than about 50 ppm of water, extruding the dried mixture, and molding the extruded composition into an article of manufacture using molding techniques such as blow molding, injection molding, thermoforming and the like. In one embodiment, injection stretch blow molding (ISBM) is used.

### BRIEF DESCRIPTION OF THE DRAWINGS

Fig. 1 is a schematic illustration of a method of forming the biocomponent fibers of one embodiment of the present invention.
Fig. 2 is a cross-sectional view of an exemplary biocomponent fiber.
Fig. 3 is a first pass DSC chart corresponding to Example 1.
Fig. 4 is a second pass DSC chart corresponding to Example 1.
Fig. 5 is a first pass DSC chart corresponding to Example 2.
Fig. 6 is a second pass DSC chart corresponding to Example 2.
Fig. 7 is a first pass DSC chart corresponding to the bicomponent fiber used in Examples 5 and 7-12.
Fig. 8 is a second pass DSC chart corresponding to the bicomponent fiber used in Examples 5 and 7-12.

### DETAILED DESCRIPTION OF EMBODIMENTS OF THE INVENTION

The foregoing and other aspects of the present invention will now be described in more detail with respect to the description and methodologies provided herein. It should be appreciated that the invention may be embodied in different forms and should not be construed as limited to the embodiments set forth herein.

The terminology used in the description of the invention herein is for the purpose of describing particular embodiments only and is not intended to be limiting of the invention. As used in the description of the embodiments of the invention and the appended claims, the singular forms "a," "an" and "the" are intended to include the plural forms as well, unless the context clearly indicates otherwise. Also, as used herein, "and/or" refers to and encompasses any and all possible combinations of one or more of the associated listed items. Furthermore, the term "about," as used herein when referring to a measurable value such as an amount of a compound, dose, time, temperature, and the like, is meant to encompass variations of 20%, 10%, 5%, 1%, 0.5%, or even 0.1% of the specified amount. When a range is employed (*e.g.,* a range from x to y) it is it meant that the measurable value is a range from about x to about y, or any range therein, such as about x₁ to about y₁, etc. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Unless otherwise defined, all terms, including technical and scientific terms used in the description, have the same meaning as commonly understood by one of ordinary skill in the art to which this invention belongs.

It will be understood that although the terms "first," "second," "third," "a)," "b)," and "c)," etc. may be used herein to describe various elements of the invention should not necesarily be limited by these terms. These terms are only used to distinguish one element of the invention from another. Thus, a first element discussed below could be termed a element aspect, and similarly, a third without departing from the teachings of the present invention. Thus, the terms "first," "second," "third," "a)," "b)," and "c)," etc. are not intended to necessarily convey a sequence or other hierarchy to the associated elements but are used for identification purposes only. The sequence of operations (or steps) is not necessarily limited to the order presented in the claims and/or drawings unless specifically indicated otherwise.

In the event of conflicting terminology, the present specification is controlling.

The embodiments described in one aspect of the present invention are not limited to the aspect described. The embodiments may also be applied to a different aspect of the invention as long as the embodiments do not prevent these aspects of the invention from operating for its intended purpose.

As discussed above, the present invention provides an extrudable PLA composition comprising polylactic acid, bicomponent fiber having a low melt temperature component and a high melt temperature component, optionally a natural oil, fatty acid, fatty acid ester, wax or waxy ester and optionally cyclodextrin. All of these components may be naturally-derived or naturally-based in contrast to petroleum-based components. In another embodiment, the extrudable PLA composition may include nanofibers. In yet another embodiment, the extrudable PLA composition may include a crystallinity agent or a crystallinity retarder. In another embodiment, the extrudable PLA composition may include a rheology modifier. In another embodiment, the extrudable PLA composition may include a colorant, and often a naturally-derived colorant. In another embodiment, the extrudable PLA composition may include a gloss agent. In yet another embodiment, the extrudable PLA composition may include a starch-based rheology agent. In another embodiment, the extrudable PLA composition may include lignin or modified lignin. Various combinations of these embodiments and additional additives are also contemplated by the present invention.

The extrudable PLA composition of the invention may be formulated so as to substantially mimic the properties of non-biodegradable conventional polymers derived from non-renewable resources (petroleum-based polymers) such as polyethylene terephthalate (PET), high density polyethylene (HDPE), polyethylene (PE), and polypropylene (PP). Specifically the present invention provides extrudable PLA compositions having heat deflection or heat distortion temperature (HDT), melt viscosity, temperature stability, and impact resistance comparable to conventional polymers. In one embodiment, the extrudable PLA composition has an HDT of greater than about 52°C, often greater than about 70°C and sometimes greater than about 100°C, and a melt temperature between about 153°C and about 230°C.

In general, the PLA may be derived from lactic acid. Lactic acid may be produced commercially by fermentation of agricultural products such as whey, corn starch, potatoes, molasses, sugar cane, and the like. Typically, the PLA polymer is formed by first forming a lactide monomer by the depolymerization of a lactic acid oligomer. This monomer may then be subjected to ring-opening polymerization of the monomer. For purposes of this disclosure, the term 'lactide-based polymer' is intended to by synonymous with the terms polylactide, polylactic acid (PLA) and polylactide polymer, and is intended to include any polymer formed via the ring opening polymerization of lactide monomers, either alone (i.e., homopolymer) or in mixture or copolymer with other monomers. The term is also intended to encompass any different configuration and arrangement of the constituent monomers (such as syndiotactic, isotactic, and the like). The lactide-based polymer may or may not be derived from a renewable resource.

The lactide monomer may be polymerized in the presence of a suitable polymerization catalyst, at elevated heat and pressure conditions, as is generally known in the art. The catalyst may be any compound or composition that is known to catalyze the polymerization of lactide. Such catalysts are well known, and include alkyl lithium salts and the like, stannous octoate, aluminum isopropoxide, and certain rare earth metal compounds as described in U.S. Patent No. 5,028,667. The particular amount of catalyst used may vary generally depending on the catalytic activity of the material, as well as the temperature of the process and the polymerization rate desired. Typical catalyst concentrations include molar ratios of lactide to catalyst of between about 10:1 and about 100,000:1, and in one embodiment from about 2,000:1 to about 10,000:1. According to one exemplary process, a catalyst may be distributed in a starting lactide monomer material. If a solid, the catalyst may have a relatively small particle size. In one embodiment, a catalyst may be added to a monomer solution as a dilute solution in an inert solvent, thereby facilitating handling of the catalyst and its even mixing throughout the monomer solution. In those embodiments in which the catalyst is potentially an undesirable material, e.g., may pose a health hazard, the process may also include steps to remove catalyst from the mixture following the polymerization reaction, for instance one or more leaching steps.

In one embodiment, a polymerization process may be carried out at elevated temperature, for example, between about 95°C and about 200°C, or in one embodiment between about 110°C and about 170°C, and in another embodiment between about 140°C and about 160°C. The temperature may generally be selected so as to obtain a reasonable polymerization rate for the particular catalyst used while keeping the temperature low enough to avoid polymer decomposition. In one embodiment, polymerization may take place at elevated pressure, as is generally known in the art. The process typically takes between about 1 and about 72 hours, for example between about 1 and about 4 hours.

The molecular weight of the degradable polymer should be sufficiently high to enable entanglement between polymer molecules and yet low enough to be melt processed. For melt processing, PLA polymers or copolymers have weight average molecular weights of from about 10,000 g/mol to about 600,000 g/mol, preferably below about 500,000 g/mol or about 400,000 g/mol, more preferably from about 50,000 g/mol to about 300,000 g/mol or about 30,000 g/mol to about 400,000 g/mol, and most preferably from about 100,000 g/mol to about 250,000 g/mol, or from about 50,000 g/mol to about 200,000 g/mol. When using PLA, it is preferred that the PLA is in the semi-crystalline or partially crystalline form.

Because lactic acid has an asymmetric carbon atom it exists in both a L-form and a D-form. The L-form is referred to as poly-L-lactic acid ("PLLA") and the D-form is referred to as poly-D-lactic acid ("PDLA"). To form semi-crystalline PLA, in one embodiment at least about 90 mole percent of the repeating units in the polylactide be one of either L- or D-lactide, and even more preferred at least about 95 mole percent. The processing may be conducted in such a way that facilitates crystalline formation, for example, using extensive orientation. Alternatively amorphous PLA may be blended with a PLA having a higher degree of crystallinity. Alternatively, crystallinity agents as described below may be added to make amorphous PLA more crystalline and/or to adjust the levels of amorphous PLA and crystalline PLA when both are used.

Polylactide homopolymer obtainable from commercial sources may also be utilized in forming the disclosed polymeric composite materials. For example, PLA, PLLA and/or PDLA are available from Polysciences, Inc, Natureworks, LLC, Cargill, Inc., Mitsui (Japan), Shimadzu (Japan), Teijin (Japan), Chronopol, Toyota Tsusho (Japan) or Corbion (Netherlands) and may be utilized in the disclosed methods. The PLA polymer may have a melting point sufficiently low for processability but high enough for thermal stability. Thus the melting point may be between about 80°C to about 190°C, and in some embodiments is between about 150°C to about 180°C.

The PLA may be copolymerized with one or more other polymeric materials. In one embodiment, the lactide-based copolymer may be copolymerized with one or more other monomers or oligomers derived from a renewable resource. Thus in one embodiment the lactide-based copolymer may be a PLA polymer or copolymer and polyhydroxy alkanoate (PHA). PHA is rapidly environmentally degradable but often does not have the processability of PLA. PHA may be derived by the bacterial fermentation of sugars or lipids. Exemplary PHAs are described in U.S. Patent No. 6,808,795 B2. A commercially available PHA is Nodax™ from Proctor & Gamble.

In another embodiment, the PLA may be copolymerized with other polymers or copolymers which may or may not be biodegradable and/or may or may not be naturally-derived. Such polymers or copolymers may include polypropylene (PP), high density polyethylene (HDPE), aromatic/aliphatic polyesters, aliphatic polyesteramide polymers, polycaprolactones, polyesters, polyurethanes derived from aliphatic polyols, polyamides, polyethylene terephthalate (PET), polystyrene (PS), polyvinylchloride (PVC), and cellulose esters either in naturally-based and/or biodegradable form or not.

The extrudable PLA composition further includes a bicomponent fiber. Although in one aspect a bicomponent fiber is utilized, the fiber may be a multicomponent fiber having two or more components. Moreover such fiber is typically a microfiber having a fineness of about less than about 10 d/f and often less than about 5 d/f. In operation, the fibers are extruded from separate extruders. The individual polymer type segments within the bicomponent fiber have a fineness of about less than about 10 microns and often less than about 5 microns. The polymers are arranged in substantially constantly positioned distinct zones across the cross-section of the fibers. The components are arranged in an island-in-the-sea configuration. Various methods for forming bicomponent and multicomponent fibers are described in, for example, U.S. Patent No. 4,789,592 to Taniguchi et al., U.S. Patent No. 5,336,552 to Strack et al., U.S. Patent No. 5,108,820 to Kaneko et al., U.S. Patent No. 4,795,668 to Kruege et al., U.S. Patent No. 5,382,400 to Pike et al, U.S. Patent No. 6,200,669 to Marmon et al, and U.S. Patent No. 8,710,172 to Wang et al. Bicomponent or multicomponent fibers having various irregular shapes may also be formed, such as described in U.S. Patent No. 5,277,976 to Hogle et al., U.S. Patent No. 5,162,074 to Hills, U.S. Patent No. 5,466,410 to Hills, U.S. Patent No. 5,069,970 to Largman et al, and U.S. Patent No. 5,057,368 to Largman et al. An example of a bicomponent fiber is Cyphrex™ fibers available from Eastman Chemicals.

The bicomponent fiber comprises a low melt temperature "sea" component and a high melt temperature "island" component. The low melt temperature "sea" component in one embodiment may be a naturally-derived, non-petroleum based polymer such as high density polyethylene (HDPE) available from Braskem (Brazil). In another embodiment, the low melt temperature "sea" component may be a naturally-derived PLA available as 7001D from NatureWorks. The high melt "island" component is used to raise the thermal stability of the extrudable PLA composition. In one embodiment, the high melt temperature "island" component is a naturally-derived PET (bioPET) available from Toyota Tsusho. In another embodiment, the "island" component comprises 100% poly(L-lactic acid) (PLLA) or 100% poly(D-lactic acid) (PDLA). In another embodiment, the "island" component comprises a polylactic stereocomplex composition comprising about 20% to about 80% PLLA and about 80% to about 20% PDLA. In one embodiment, the stereocomplex-PLA composition is 50% PLLA and 50% PDLA, i.e., a 50/50 blend of PLLA and PDLA.

Suitable stereocomplex PLLA and PDLA and blends thereof are available from Corbion (Netherlands) and Teijin (Japan). Such compositions are described, for example, in PCT Publication WO 2014/147132 A1, U.S. Patent No. 8,304,490 B2 and U.S. Patent No. 8,962,791 B2. These high melt temperature stereocomplex PLA compositions typically have a melt temperature greater than about 200°C and often greater than about 220°C.

In another embodiment, lignin and chemically modified lignin may be blended with the PLA to increase melt temperature. In one embodiment, the bicomponent fibers may comprise about 0.1% to about 10% by weight of the overall extrudable PLA composition. The bicomponent fiber may function as a carrier for the introduction of other components into the extrudable PLA composition.

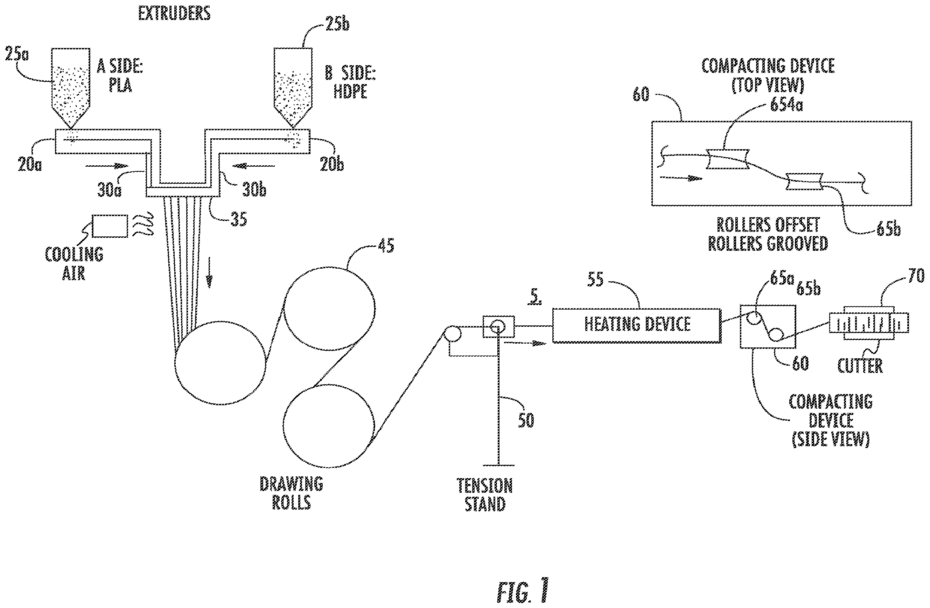

Referring to Fig. 1, one embodiment of a method of forming fibers is illustrated. The illustrated embodiment shows a continuous line of forming the fibers noting that the method could involve spinning the fibers, placing on a spool and at a later time drawings and cutting the fibers on a separate line. In general, the components of the bicomponent fiber are extruded through a spinneret, quenched, and drawn into a vertical passage of a fiber drawn unit.

The high melt component (e.g., stereocomplex PLA) and the low melt component (e.g., HDPE) are fed into extruders **20a** and **20b** from hoppers **25a** and **25b.** The extruder is heated to a temperature above that of the low melt component and may be heated to greater than 135°C if HDPE is used, for example. The high and low melt components are fed through conduit **30a, 30b** to a spinneret **35.** Such spinnerets for extruding bicomponent fibers are well known to those skilled in the art. For example, various patterns of openings in the spinneret can be used to create various flow patterns of the high and low melt components. A quench blower **40** to provide cooling air may be positioned to one side of the filaments as shown or may be positioned on both sides.

The filaments are then passed from drawing rolls **45,** placed under tension using a tension stand **50** and delivered to a heating device **55** to heat the fiber above the softening point of the low melt component so that sufficient melt occurs to act as a bonding agent that holds the high melt fibers together.

The fibers are then compacted using compaction device **60.** In one embodiment, this is accomplished by creation of a small twist in the tow band of the fully oriented yarn using a series of rollers **65a, 65b,** in one embodiment grooved rollers. Such a twist aids in applying pressure to create a semi-permanent bond of the low melt component after heating to its softening point. In one embodiment the **65a, 65b** are slightly offset from each other such that the path of the tow passing through the two grooved rolls creates two distinct turns within a distance of less than eight inches. The first turn of the tow should produce an angle of about 140-170 degrees as measured to the outside of the original path of the tow. The second turn should produce an angle of approximately equal angularity to the first but turning in the opposite direction as measured to the inside of the new path of the tow after the second turn. The sharper the angle, the tighter the twist and adjustment of the angle will result in higher efficiency of compaction.

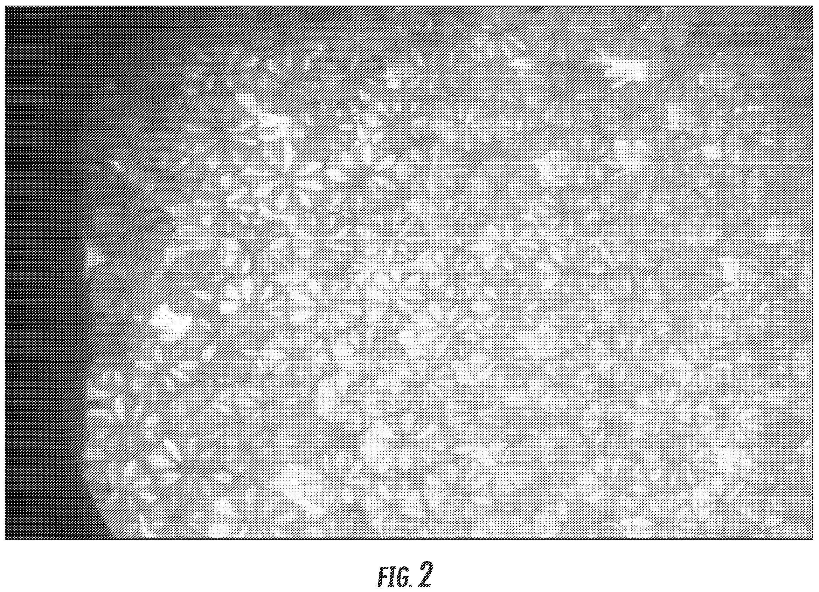

After compaction, the bicomponent fiber may be cut using a cutter **70** to a length of not greater than 6mm, sometimes not greater than 3mm and often not greater than 1.5mm. After cutting, the fiber may be dried to less than 100 ppm. Referring to Fig. 2, an exemplary 16 pie wedge island-in-the-sea bicomponent fiber is shown.

In another embodiment, the filaments of the individually spun yarns may be spun simultaneously into a larger type of monofilament of a uniform diameter and equal in denier to the combination of up to 144 individual yarns composed of 3 denier-per-filament by designing the spin pack such that the cross section of the monofilament may contain many multiples of the individual filaments. For example, instead of a spin die containing 288 filaments that when wound together create a 864 denier (DEN) yarn wound onto a bobbin. The individual monofilament would be 864 DEN. The result would be a single filament, i.e. a monofilament, with a cross section containing 4,608 pie shapes in a roughly concentric formation, but formed to alternate high melt and low melt components within each distinct 16 pie segment shape within its whole. To accommodate this design, the monofilament may be spun in from a horizontally oriented spin die instead of a vertically oriented spin die. The orientation of the spin die to horizontal will allow the filament to be quenched immediately in either a trough type water bath or via an underwater chopper, such as Gala Underwater Pelletizer type chopper.

In another embodiment, after heating the fiber in the heating device **55,** the compaction step may be done at a later time as a separate non-continuous process.

The extrudable PLA composition may include natural oil, fatty acid, fatty acid ester, wax or waxy ester. In one embodiment, the natural oil, fatty acid, fatty acid ester, wax or waxy ester is coated on the PLA (e.g., PLA pellets) pellets using agitation. A blend or mixture of the natural oil, fatty acid, wax or waxy ester may be used.

In an embodiment, the extrudable PLA composition may include a natural oil. Suitable natural oils include lard, beef tallow, fish oil, coffee oil, soy bean oil, safflower oil, tung oil, tall oil, calendula, rapeseed oil, peanut oil, linseed oil, sesame oil, grape seed oil, olive oil, jojoba oil, dehydrated castor oil, tallow oil, sunflower oil, cottonseed oil, corn oil, canola oil, orange oil, and mixtures thereof. In operation, shaped particles or additives to be introduced into the PLA polymer should preferably be coated with at least one of the above oils and heated to about 71°C (160°F) to about 82°C (180°F) for a period of about 4 to about 12 hours. This will substantially saturate the particle or additive with the oil. In this manner after a particle or additive is saturated with oil in the presence of heat, the particle may be substantially included into the PLA polymer matrix. In another embodiment, the oil may be injected into the PLA.

Suitable waxes include naturally-derived waxes and waxy esters may include without limitation, bees wax, plant-based waxes, bird waxes, non-bee insect waxes, and microbial waxes. Waxy esters also may be used. As utilized herein, the term 'waxy esters' generally refers to esters of long-chain fatty alcohols with long-chain fatty acids. Chain lengths of the fatty alcohol and fatty acid components of a waxy ester may vary, though in general, a waxy ester may include greater than about 20 carbons total. Waxy esters may generally exhibit a higher melting point than that of fats and oils. For instance, waxy esters may generally exhibit a melting point greater than about 45°C. Additionally, waxy esters encompassed herein include any waxy ester including saturated or unsaturated, branched or straight chained, and so forth. Waxes have been found to provide barrier properties, such as reduced Oxygen Transfer and Water Vapor Transfer.

Suitable fatty esters or fatty acid esters are the polymerized product of an unsaturated higher fatty acid reacted with an alcohol. Exemplary high fatty esters include oleic ester, linoleic ester, resinoleic ester, lauric ester, myristic ester, stearic ester, palmitic ester, eicosanoic ester, eleacostearic ester, and the like, and mixtures thereof.

These esters may be combined with suitable oils, as well as various esters derived from carboxylic acids may be included to act as plasticizers for the PLA. Exemplary carboxylic acids include acetic, citric, tartaric, lactic, formic, oxalic and benzoic acid. Furthermore these acids may be reacted with ethanol to make an acid ethyl ester, such as ethyl acetate, ethyl lactate, monoethyl citrate, diethyl citrate, triethyl citrate (TEC). Most naturally occurring fats and oils are the fatty acid esters of glycerol.

In addition to the PLA described above, the extrudable PLA composition includes cyclodextrin. Cyclodextrin (CD) is cyclic oligomers of glucose which typically contain 6, 7, or 8 glucose monomers joined by α-1,4 linkages. These oligomers are commonly called α-cyclodextrin (a-CD), β-cyclodextrin (β-CD, or BCD), and γ-cyclodextrin (γ-CD), respectively. Higher oligomers containing up to 12 glucose monomers are known but their preparation is more difficult. Each glucose unit has three hydroxyls available at the 2, 3, and 6 positions. Hence, α-CD has 18 hydroxyls or 18 substitution sites available and may have a maximum degree of substitution (DS) of 18. Similarly, β-CD and γ-CD have a maximum DS of 21 and 24 respectively. The DS is often expressed as the average DS, which is the number of substituents divided by the number of glucose monomers in the cyclodextrin. For example, a fully acylated β-CD would have a DS of 21 or an average DS of 3. In terms of nomenclature, this derivative is named heptakis(2,3,6-tri-O-acetyl)-β-cyclodextrin which is typically shortened to triacetyl-β-cyclodextrin.

The production of CD involves first treating starch with an α-amylase to partially lower the molecular weight of the starch followed by treatment with an enzyme known as cyclodextrin glucosyl transferase which forms the cyclic structure. Topologically, CD may be represented as a toroid in which the primary hydroxyls are located on the smaller circumference and the secondary hydroxyls are located on the larger circumference. Because of this arrangement, the interior of the torus is hydrophobic while the exterior is sufficiently hydrophilic to allow the CD to be dissolved in water. This difference between the interior and exterior faces allows the CD or selected CD derivatives to act as a host molecule and to form inclusion complexes with hydrophobic guest molecules provided the guest molecule is of the proper size to fit in the cavity.

Thus PLA may be the guest molecule. However, cyclodextrins, particularly BCD, are not soluble in PLA resin thus there may be poor dispersion. One known solution is to use organic solvents to aid dispersion. The use of such organic solvents, however, is not desirable in that these solvents, e.g., toluene, methylene chloride, etc., are not environmentally friendly.

In another embodiment, the extrudable PLA composition may include nanofibers. Suitable nanofibers include glass fibers, i.e., fibers derived from silica and have a diameter of about 1µm or less using a SEM measurement and typically have a length of about 65 to about 650 nm. Suitable nanofibers are available from Johns Manville as Micro-Stand™ 106-475. Alternatively nanofibers derived from treated (refined) cellulose may be used. For example, wood pulp could be treated with a natural oil and wherein the pulp and oil may be mechanically refined in a pulp type refiner to develop fibrils which causes the solution to form a gel. Biodegradable wood fibers such as bleached or unbleached hardwood and softwood kraft pulps may be used as the pulp. High fiber count northern hardwoods such as Aspen and tropical hardwoods such as eucalyptus are of particular interest. Also nonwood fibers may be used such as flax, hemp, esparato, cotton, kenaf, bamboo, abaca, rice straw, or other fibers derived from plants. Alternatively a renewable and biodegradable source of cellulose fibers, particularly those having a microfiber structure, for example, switch grass may be used. Although Applicants do not wish to be bound by any one theory, it is believed that the nanofibers contribute to the crystallinity of the PLA thus facilitating the use of amorphous PLA and also contributing to improved physical properties of the extrudable PLA composition when either amorphous and/or partially crystalline PLA are utilized.

In another embodiment, the extrudable PLA composition may include a crystallinity agent and wherein the polymer may be in the form of platelet-like crystals. Examples of crystallinity agents include, but are not limited to talc, kaolin, mica, bentonite clay, calcium carbonate, titanium dioxide and aluminum oxide.

In another embodiment, the extrudable PLA composition may include a starch-based melt rheology modifier. Suitable starches are those produced by plants and include cereal grains (corn, rice, sorghum, etc.), potatoes, arrowroot, tapioca and sweet potato. In operation, these plant-based starches tend to gel when combined with PLA and can be used to provide a smooth surface to the molded article and/or provide mold release properties.

In another embodiment, the extrudable PLA composition may include one or more crystallinity retarders. Examples of crystallinity retarders include, but are not limited to, xanthan gum, guar gum, and locust bean gum.

In another embodiment, colorants to provide the common colors associated with pharmaceutical and nutraceutical containers, i.e., white, amber, and green, may be included. In an embodiment wherein a white container is desired, titanium dioxide may be included preferably with safflower oil as the natural oil. Typically the amount of colorant present is 0 to 67% depending on the type of extruder used, and may preferably be about 0.1 to 3% based on the overall weight of the extrudable PLA composition. In an embodiment wherein a green container is desired, sodium copper chlorohyllin or a food grade analine powder available from DDW The Color House, may be used as the colorant. In an embodiment wherein an amber container is desired, a blend of 0.019 to 0.021% food grade black, 0.008 to 0.010% blue, 0.104 to 0.106% red, and 0.063 to 0.065% yellow colorants available from Keystone, Chicago, Illinois may be used.

Agents to provide additional water and oxygen barrier properties may be included. Exemplary water and oxygen barrier agents include candelilla wax, beeswax, and other waxes. Preferably such a barrier agent is derived from a renewable source.

Gloss agents to provide an aesthetically pleasing gloss to the container may be included. Exemplary gloss agents include shea butter and nut oils such as Brazil nut oil. Preferably such a gloss agent is derived from a renewable source.

In an alternate embodiment, the extrudable PLA composition may include lignin or modified lignin to improve temperature stability and impact resistance. Such lignin or modified lignin in one embodiment is added to the bicomponent fiber such that the bicomponent fiber acts as a carrier. The lignin may be lignin isolated from a biomass that has not been exposed to harsh reaction conditions and has not been denaturated and/or degraded by the isolation process such as described in U.S. Serial No. 14/619,451. Such a lignin may be modified by esterification or transesterification to provide an acetylated or ethylated lignin such as lignin acetule or lignin ethylate. In such an embodiment, a water dispersible polyester such as the AQ™ polymers available from Eastman Chemicals may be included.

Other additives may include other natural or synthetic plasticizers such as impact modifiers, fiber reinforcement other than nanofibers, antioxidants, antimicrobials, fillers, UV stabilizers, glass transition temperature modifiers, melt temperature modifiers and heat deflection temperature modifiers. Of particular interest as fillers are biodegradable nonwood fibers such as those used for the nanofibers, and include kenaf, cotton, flax, esparto, hemp, abaca or various fiberous herbs.

In general, the extrudable PLA composition comprising a) about 0 to about 100% amorphous PLA; b) about 0 to about 100% partially crystalline or crystalline PLA; c) about 0.1% to about 20% bicomponent fiber; d) about 0.1 to about 8% natural oil or natural wax; e) about 0.01 to about 5% nanofibers; f) about 0.05 to about 8% BCD; g) about 0 to about 10% crystallinity agent; h) about 0 to about 1% starch-based melt rheology modifier; i) about 0 to about 1% polysaccharide crystallinity retarder; j) about 0 to about 5% colorant; k) about 0 to about 1% plasticizer; 1) about 0 to about 1% gloss agent; and m) about 0 to about 4% barrier agent. In an embodiment of the invention, the extrudable PLA composition may comprise greater than about 85%, 86%, 87%, 88%, 89%, 90%, 91%, 92%, 93%, 94%, 95%, 96%, 97% 98% or about 99% amorphous or crystalline PLA. In another embodiment of the invention, the extrudable PLA composition may comprise a mixture of amorphous and crystalline PLA. In still another embodiment, the bicomponent fiber may comprise 0.1 up to 20% of the extrudable PLA composition. In still another embodiment, BCD is present in the extrudable PLA composition in an amount of about 0.05%, 0.4%, 1%, 2%, 3%, 4%, 5%, 6%, 7%, or up to about 8% BCD. In yet another embodiment, the natural oil or natural wax is present in the extrudable PLA composition in an amount of about 0.1%, 0.25%, 0.5%, 0.75%, 1%, 1.5%, 2%, 3%, 4%, 5%, 6%, 7%, or up to about 8% natural oil. In a further embodiment, the nanofibers are present in an amount of about 0.1%, 0.2%, 0.25%, 0.3%, 0.4%, 0.5%, 0.75%, 1%, 2%, 3%, 4% or up to about 5% nanofibers. In still a further embodiment, the crystallinity agent is optionally present in the extrudable PLA composition in an amount of about 1%, 2%, 3%, 4%, 5%, 6%, 7%, 8%, 9%, up to about 10% crystallinity agent. In yet another embodiment, the starch-based melt rheology modifier is optionally present in the extrudable PLA composition in an amount of about 0.1%, 0.2%, 0.3%, 0.4%, 0.5%, 0.6%, 0.7%, 0.8%, 0.9%, up to about 1% starch-based melt rheology modifier. In still another embodiment, the polysaccharide crystallinity retarder is optionally present in an amount of about 0.1%, 0.2%, 0.3%, 0.4%, 0.5%, 0.6%, 0.7%, 0.8%, 0.9%, up to about 1% polysaccharide crystallinity retarder. In still a further embodiment, the colorant is optionally present in the extrudable PLA composition in an amount of about 0.1%, 0.2%, 0.3%, 0.4%, 0.5%, 0.6%, 0.7%, 0.8%, 0.9%, up to about 1% colorant. In still a further embodiment, the plasticizer is optionally present in the extrudable PLA composition in an amount of about 0.1%, 0.2%, 0.3%, 0.4%, 0.5%, 0.6%, 0.7%, 0.8%, 0.9%, up to about 1% plasticizer. In still a further embodiment, the gloss agent is optionally present in the extrudable PLA composition in an amount of about 0.1%, 0.2%, 0.3%, 0.4%, 0.5%, 0.6%, 0.7%, 0.8%, 0.9%, up to about 1% gloss agent. In still a further embodiment, the barrier agent is optionally present in the extrudable PLA composition in an amount of about 0.1%, 0.2%, 0.3%, 0.4%, 0.5%, 0.6%, 0.7%, 0.8%, 0.9%, up to about 1% barrier agent.

Prior to extrusion, the extrudable PLA composition is dried to remove substantially all of the moisture, i.e., there is less than about 0.02 % water, and often less than about 0.01 % water. Typically, desicant drying is utilized.

In one embodiment, a master batch is used. By utilizing a master batch, the often more expensive additives may be first compounded in larger percentage amounts into the master batch and then added to pure or virgin PLA. Such use of a master batch may be used to incorporate additives more cost effectively, for example, those that improve properties like barrier properties, flexibility properties, HDT properties and melt flow index, and the like. Another example is that a master batch may be formulated so that the consumer has the capability of customizing the color of the article of manufacture. For example, some amount of the base colorant (e.g., green colorant) may be added to pure PLA, then the colorant/PLA composition and the master batch with smaller amounts of the green colorant(s) are combined to result in the end extrudable PLA composition having the desired color. The smaller amounts of green colorant(s) in the master batch may be selected to arrive at the desired hue or shade of the desired color.

For illustrative purposes, an extrudable PLA composition for a closure or cap having properties similar to a PET container may be made. A master batch comprising crystalline PLA, natural oil, bicomponent fibers, cyclodextrin, crystallinity agent, pigment and a crystallinity retarder is formed by coating the PLA with the oil, adding the crystallinity agent and blending with the bicomponent fiber, BCD and combining with the rest of the constituents.

The extrudable PLA composition may then be formed into an article of manufacture. For example, the process may include thermoforming, extrusion molding, injection molding or blow molding the composition in melted form. For purposes of the present disclosure, injection molding processes include any molding process in which a polymeric melt or a monomeric or oligomeric solution is forced under pressure, for instance with a ram injector or a reciprocating screw, into a mold where it is shaped and cured. Blow molding processes may include any method in which the extrudable PLA composition may be shaped with the use of a fluid and then cured to form a product. Blow molding processes may include extrusion blow molding, injection blow molding, and injection stretch blow molding, as desired. Extrusion molding methods include those in which the extrudable PLA composition is extruded from a die under pressure and cured to form the final product, e.g., a film or a fiber. Single screw or twin screw extruders may be used, the selection of which and the amounts of each component being varied depending on the extruder will be within the skill of one in the art.

With respect to extruding the extrudable PLA composition, ISBM processes may be divided into two main types. One type is a one-step process, in which the preform is molded, conditioned, and then transferred to the stretch blow molding operation before the preform is cooled below its softening temperature. The other main type of ISBM process is a two-step process in which the preform is prepared ahead of time. In this case, the preform is reheated to conduct the stretch blow molding step. The two-step process has the advantage of faster cycle times, as the stretch blow molding step does not depend on the slower injection molding operation to be completed. However, the two-step process presents the problem of reheating the preform to the stretch blow molding temperature. This is usually done using infrared heating, which provides radiant energy to the outside of the preform. It is sometimes difficult to heat the preform uniformly using this technique and unless done carefully, a large temperature gradient can exist from the outside of the preform to the center. Conditions usually must be selected carefully to heat the interior of the preform to a suitable molding temperature without overheating the outside. The result is that the two-step process usually has a smaller operating window than the one-step process. The selection of the extrudable PLA composition as described herein has been found to broaden this processing window.

In the two-step process, the preform is generally heated to a temperature at which the preform becomes soft enough to be stretched and blown. This temperature is generally above the glass transition temperature (T_{g}) of the extrudable PLA composition. A preferred temperature is from about 70°C to about 120°C. and a more preferred temperature is from about 80°C to about 100°C. In order to help obtain a more uniform temperature gradient across the preform, the preform may be maintained at the aforementioned temperatures for a short period to allow the temperature to equilibrate.

Mold temperatures in the two-step process are generally below the glass transition temperature of the extrudable PLA composition, such as from about 30°C to about 60°C., especially from about 35°C to about 55°C. Sections of the mold such as the base where a greater wall thickness is desired may be maintained at even lower temperatures, such as from about 0 to about 35°C., especially from about 5°C to about 20°C.

In the one-step process, the preform from the injection molding process is transferred to the stretch blow molding step, while the preform is at a temperature at which the preform becomes soft enough to be stretched and blown, again preferably above the T_{g} of the resin, such as from about 80 to about 120°C., especially from about 80 to about 110°C. The preform may be held at that temperature for a short period prior to molding to allow it to equilibrate at that temperature. The mold temperature in the one-step process may be above or below the T_{g} of the PLA resin. In the so-called "cold mold" process, mold temperatures are similar to those used in the two-step process. In the "hot mold" process, the mold temperature is maintained somewhat above the T_{g} of the resin, such as from about 65 to about 100°C. In the "hot mold" process, the molded part may be held in the mold under pressure for a short period after the molding is completed to allow the resin to develop additional crystallinity (heat setting). The heat setting tends to improve the dimensional stability and heat resistance of the molded container while still maintaining good clarity. Heat setting processes may also be used in the two-step process, but are used less often in that case because the heat setting process tends to increase cycle times.

In one embodiment, the resulting molded article is a container. The term "container" as used in this specification and the appended claims is intended to include, but is not limited to, any article, receptacle, or vessel utilized for storing, dispensing, packaging, portioning, or shipping various types of products or objects (including but not limited to, food and beverage products). Specific examples of such containers include boxes, cups, "clam shells", jars, bottles, plates, bowls, trays, cartons, cases, crates, cereal boxes, frozen food boxes, milk cartons, carriers for beverage containers, dishes, egg cartons, lids, straws, envelopes, stacks, bags, baggies, or other types of holders. Containment products and other products used in conjunction with containers are also intended to be included within the term "container."

In a further embodiment, the extrudable PLA composition as disclosed herein may be formed as a container, and in one particular embodiment, a container suitable for holding and protecting environmentally sensitive materials such as biologically active materials including pharmaceuticals and nutraceuticals. For purposes of the present disclosure, the term 'pharmaceutical' is herein defined to encompass materials regulated by the United States government including, for example, drugs and other biologics. For purposes of the present disclosure, the term 'nutraceutical' is herein defined to refer to biologically active agents that are not necessarily regulated by the United States government including, for example, vitamins, dietary supplements, and the like.

In yet another embodiment, the molded article is a containment product that is a closure. The term "closure" as used in the specification and the appended claims is intended to include, but is not limited to, any containment product such as caps, lids, liners, partitions, wrappers, films, cushioning materials, and any other product used in packaging, storing, shipping, portioning, serving, or dispensing an object within a container. Examples of closures include, but are not limited to, screw caps, snap on caps, tamper-resistant, tamper-evident and child-resistant closures or caps.

For illustrative purposes, an extrudable PLA composition for a container having properties similar to a PET container may be made. A master batch comprising partially crystalline or crystalline PLA, bicomponent fibers, a natural oil, nanofibers, cyclodextrin, pigment, and a crystallinity agent is formed by mixing the oil and nanofibers, adding the bicomponent fibers, oil and nanofibers to the PLA with the other constituents, then combining with a mixture of cyclodextrin and starch crystallinity retarder, followed by an addition of a crystallinity agent and then agitation and drying. A colorant/pigment may be added to the master batch. Alternatively, a separate batch of crystalline PLA and pigment may be made and the master batch and this separate batch then fed together.

An exemplary formulation for a container may comprise about 85% to about 95% crystalline polylactic acid including 0.01% to about 30% PLLA, about 0.05% to about 8% cyclodextrin, about 0.1 to about 8% natural oil or wax, 1 to 15% bicomponent fiber comprising 25% to 35% naturally-based HDPE sea and 65% to 75% 50/50 PLLA/PDLA island, about 0.01 to about 1% starch-based rheology modifier, about 0.1% to about 1% gloss agent, and about 0.01 to about 8% colorant.

Formed articles and structures incorporating the extrudable PLA composition may include laminates including the disclosed composite materials as one or more layers of the laminate. For example, a laminate structure may include one or more layers formed of composite materials as herein described so as to provide particular inhibitory agents at predetermined locations in the laminate structure. Barrier properties may also be increased by using a wax coating inside or outside of the vessel being utilized for spraying or dipping.

Alternatively the various extrusion, blow molding, injection molding, casting or melt processes known to those skilled in the art may be used to form films or sheets. Exemplary articles of manufacture include articles used to wrap, or otherwise package food or various other solid articles. The films or sheets may have a wide variety of thicknesses, and other properties such as stiffness, breathability, temperature stability and the like which may be changed based on the desired end product and article to be packaged. Exemplary techniques for providing films or sheets are described, for example, in U.S. Patent Publication Nos. 2005/0112352, 2005/0182196, and 2007/0116909, and U.S. Patent No. 6,291,597.

In an exemplary embodiment, a laminate may include an impermeable polymeric layer on a surface of the structure, e.g., on the interior surface of a container (e.g., bottle or jar) or package (e.g., blister pack for pills). In one particular embodiment, an extruded film formed from the extrudable PLA composition may form one or more layers of such a laminate structure. For example, an impermeable PLA-based film may form an interior layer of a container so as to, for instance, prevent leakage, degradation or evaporation of liquids that may be stored in the container. Such an embodiment may be particularly useful when considering the storage of alcohol-based liquids, for instance, nutraceuticals in the form of alcohol-based extracts or tinctures.

The following examples will serve to further exemplify the nature of the invention but should not be construed as a limitation on the scope thereof, which is defined by the appended claims.

### EXAMPLES

In the following examples, non SI-units are used, which may be converted to the respective SI or metric units according to the following conversions:
1 inch= 2.54 cm; 1 psi = 6,894.76 Pa; T(°C) = (T(°F) - 32) x 5/9

### Example 1

An extrudable PLA composition comprising the following is formed:
93.5 percent PLA
2.5 percent bicomponent fiber (50% PDLA / 50% PLLA)
1.2 percent safflower oil
0.2 percent arrowroot
0.4 percent BCD
2 percent titanium dioxide
0.1 percent shea butter
0.1 percent candelilla wax.

This was compounded on a Theyson 21mm twin screw extruder, quenched in a cool water bath and chopped on a Davis Standard rotary pelletizer to uniform finished pellets. The fully compounded pellets were dried in a Conair Regenerating Desiccant dryer to remove moisture down to 100 ppm. The dried pellets were then extruded into a film on a Davis Standard 1 inch single screw extruder using a 2 inch film die head under the following temperature profile.
Zone 1: 360 F
Zone 2: 370 F
Zone 3: 390 F
Zone 4: 400 F
Nozzle: 400 F
Film Die: 400 F
Screw Speed 80%
Pressure 200 PSI

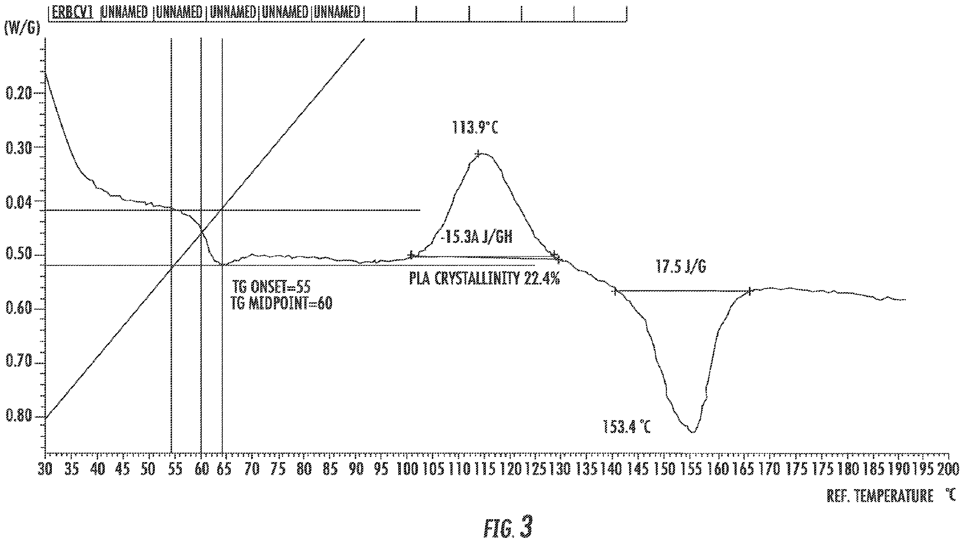

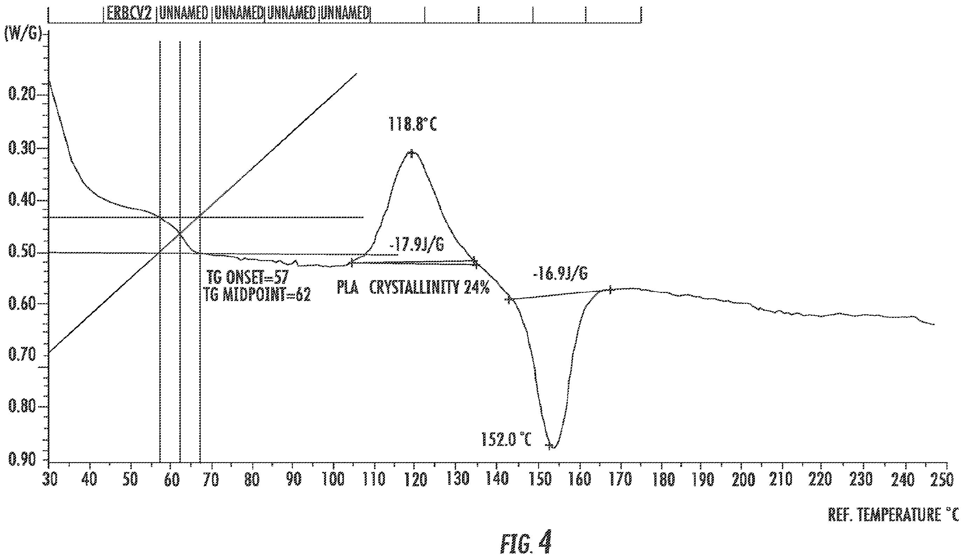

This film was cut into samples and HDT measured. Three individual data points were averaged to give an average HDT value of 65.2°C. The first and second pass DSC charts for Example 1 are provided in Figs. 3 and 4.

### Example 2

An extrudable PLA composition was formed comprising the following formula:
93.9 percent PLA
2.5 percent bicomponent fiber (50% PDLA / 50% PLLA)
1.2 percent safflower oil
0.2 percent arrowroot
2.0 percent titanium dioxide
0.1 percent shea butter
0.1 percent candelilla wax

This formula was compounded on a Theyson 21mm twin screw extruder at the following setting:
Zone 1: 334 F
Zone 2: 392 F
Zone 3: 339 F
Zone 4: 402 F
Zone 5: 405 F
Die (6): 405 F
RPM 255
Melt Temp 426 F

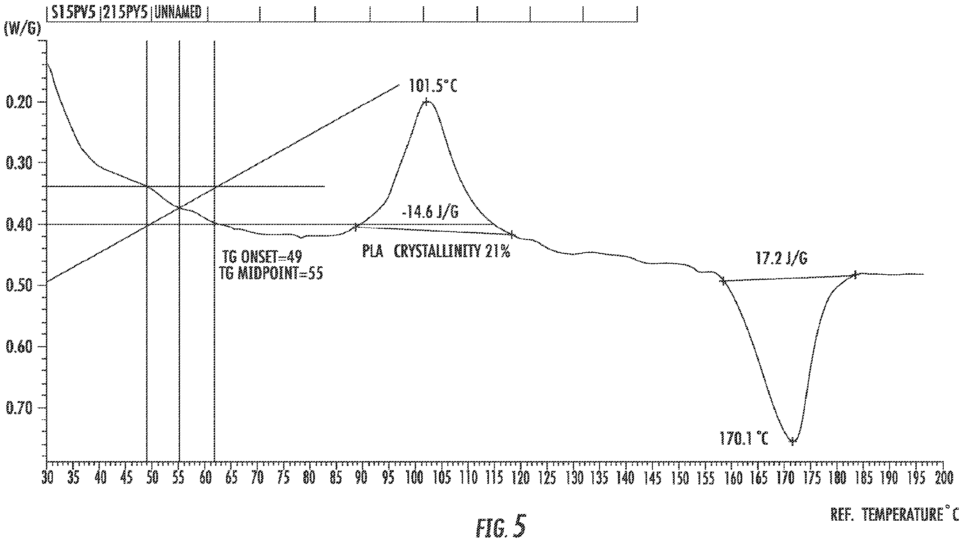

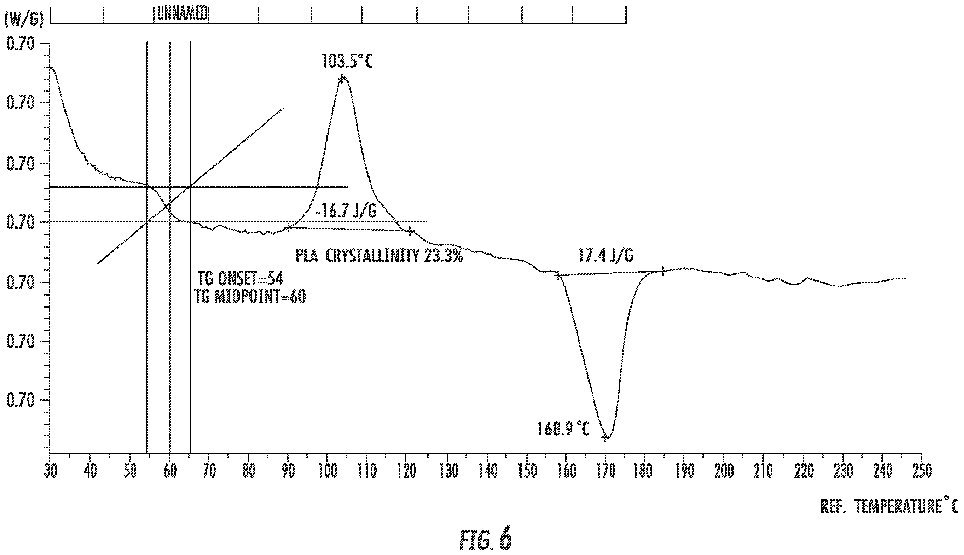

This film was cut into samples and HDT measured. Three individual data points were averaged to give and average HDT value of 62.9°C. The first and second pass DSC charts for Example 2 are provided in Figs. 5 and 6.

### EXAMPLES 3-12 and COMPARATIVE EXAMPLE

In order to measure melt flow index and heat deflection temperature (hot and cold mold) and tensile properties, the following samples were made.

| Example | Polylactic Acid¹ | BiCo Composition | Safflower Oil | BCD | TiO₂ |
|---|---|---|---|---|---|
| 3 | L130² | 5% | 1.2% | 0.4% | 1% |
| | | PET/HDPE | | | |
| 4 | L175³ | 5% | 1.2% | 0.4% | 1% |
| | | PET/HDPE | | | |
| 5 | L175 | 5% 60/40 | 1.2% | 0.4% | 0% |
| | | (PLA/HDPE with TiO₂ | | | |
| 6 | L130 | 5% 50/50 | 1.2% | 0.4% | 1% |
| | | PLA/HDPE | | | |
| 7 | 7001D | 5% 60/40 | 1.2% | 0.4% | 1% |
| | | PLA/HDPE | | | |
| 8 | L130 | 5% 60/40 | 1.2% | 0.2% | 1% |
| | | PLA/HDPE | | | |
| 9 | L130 | 5% 60/40 | 1.2% | 0.1% | 1% |
| | | PLA/HDPE | | | |
| 10 | L130 | 5% 60/40 | 1.2% | 0.05% | 1% |
| | | PLA/HDPE | | | |
| 11 | L175 | 5% 60/40 | 1.2% | 0.4% | 1% |
| | | PLA/HDPE | | | |
| 12 | L175 | 1% 60/40 | 1.2% | 0.4% | 1% |
| | | PLA/HDPE | | | |
| Comparative | L130 | 5% | 0.0% | 0.0% | 0.0% |
| | | PET/HDPE | | | |

| | | | | | |
|---|---|---|---|---|---|
| ¹ Available from NatureWorks ² Available from Corbion ³ Available from Corbion | | | | | |

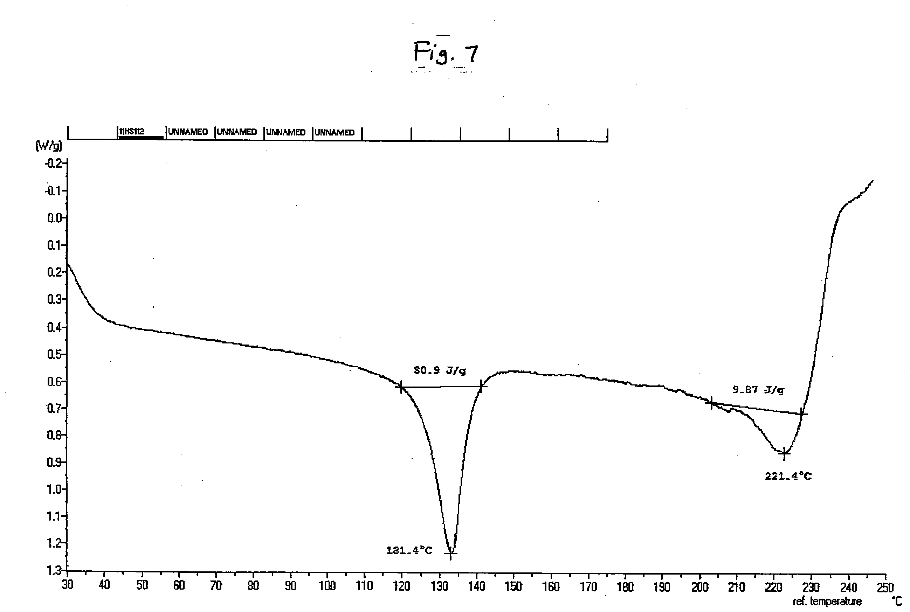

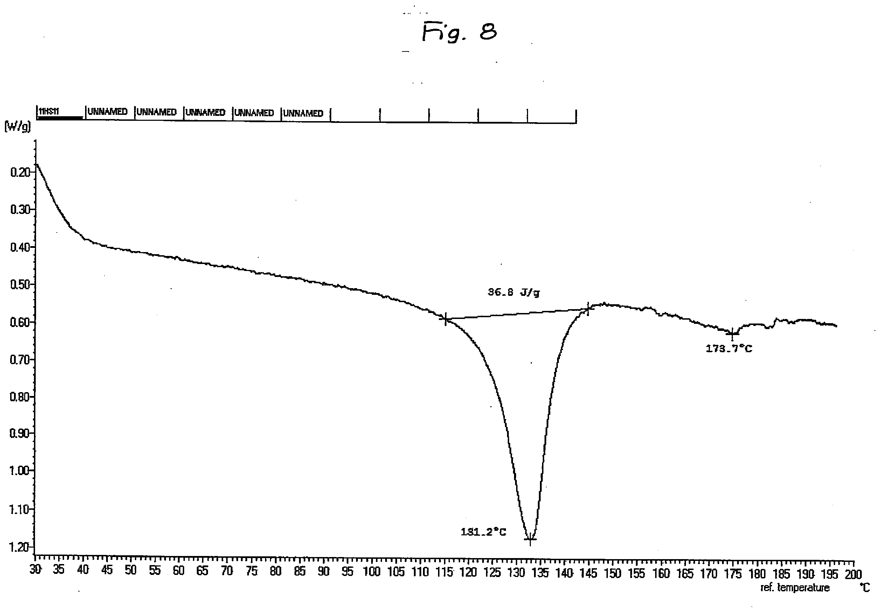

First and Second pass DSC charts are provided for the type of bicomponent fiber used in Examples 5 and 7-12. Example 6 is provided in Figs. 7 and 8.

### MELT FLOW INDEX

Melt flow index testing was conducted on a Goettfert Melt Indexer, Model # MI-4, Serial # 10000245. Barrel Diameter is 9.5320 mm, die length - 8.015 mm - 2.09 mm orifice diameter. The samples were tested after vacuum drying. A 6 minute preheat was utilized. Testing was conducted per ASTM D1238 Standard Test Method for Flow Rates of Thermoplastics by Extrusion Plastometer using Condition V (210°C and 2.16 Kg Load).

| Example | Melt Flow Index (g/10min) |
|---|---|
| 3 | 14.8 |
| 4 | 9.3 |
| 5 | 20.5 |
| 6 | 22.3 |
| 7 | 13.4 |
| 8 | 17.3 |
| 9 | 17.2 |
| 10 | 19.8 |
| 11 | 12.7 |
| 12 | 14.4 |
| Comparative | 14.4 |

### HEAT DEFLECTION TEST (Hot and Cold Mold)

Testing was conducted on a Ceast HDT 6 Vicat, Model 692.00 unit with WINHDT6-1996 software per ASTM D648 Standard Test Method for Deflection Temperature of Plastics Under Flexural Load.
Stress tested = 66 psi(455 kPa)
Specimen Support = 100 mm
Immersion Bath = Dow Corning 200/100 Fluid
Heat Rate = 2°C/minute
Deflection = 0.25 mm

| Example | HDT (Cold Mold) | HDT (Hot mold) |
|---|---|---|
| 3 | 52.4 | 114.9 |
| 4 | 52.5 | 111.0 |
| 5 | 52.9 | 104.9 |
| 6 | 52.4 | 112.0 |
| 7 | 51.2 | 52.9 |
| 8 | 51.4 | 110.8 |
| 9 | 51.8 | 122.2 |
| 10 | 51.6 | 120.3 |
| 11 | 52.4 | 105.4 |
| 12 | 51.7 | 97.9 |
| Comparative | 52.5 | 108.5 |

### VICAT SOFTENING TEST

| Example | Vicat Softening Point (°C) (Cold Mold) | Vicat Softening Point (°C) (Hot Mold) |
|---|---|---|
| 3 | 61.6 | 164.7 |
| 4 | 62.4 | 164.7 |
| 5 | 60.2 | 162.6 |
| 6 | 60.9 | 163.9 |
| 7 | 60.3 | 59.7 |
| 8 | 60.8 | 162.1 |
| 9 | 60.9 | 164.0 |
| 10 | 61.0 | 163..2 |
| 11 | 61.3 | 163.6 |
| 12 | 60.4 | 163.7 |
| Comparative | 62.4 | 164.6 |

### TENSILE TEST - COLD MOLD

Testing was conducted on an MTS Sintech 2/S unit with Test Works software applying principles from ASTM D638 Tensile Properties of Plastics. A 10kN load cell was used. An MTS 2" extensometer was used for calculating all tensile properties.
Crosshead Speed: 2.0 inches/minute
Sample Size: ASTM Type 1 Dog bone Sample
Gage Length: 2.0 inches

| Example | Modulus (PSI) | Yield Stress (PSI) | Elongation at Yield (%) | Break Stress (PSI) | Elongation at Break (%) |
|---|---|---|---|---|---|
| 3 | 375618.5 | 80461.1 | 2.0 | 5034.2 | 37.7 |
| 4 | 337647.8 | 8249.7 | 1.7 | 5163.3 | 48.0 |
| 5 | 405774.9 | 8313.2 | 1.7 | 3829.9 | 70.6 |
| 6 | 363195.8 | 7581.9 | 1.3 | 4899.4 | 64.8 |
| 7 | 258856.7 | 7284.8 | 2.2 | 4297.6 | 86.8 |
| 8 | 223833.9 | 7180.9 | 3.2 | 3696.7 | 86.2 |
| 9 | 225476.7 | 7270.8 | 3.3 | 4205.2 | 77.8 |
| 10 | 224907.7 | 7523.9 | 3.3 | 4252.3 | 75.1 |
| 11 | 219702.6 | 7611.3 | 3.3 | 4248.1 | 86.4 |
| 12 | 303350.9 | 7777.9 | 2.1 | 4418.7 | 59.9 |
| Comparative | 363037.5 | 6488.8 | 1.4 | 5686.7 | 3.6 |

### TENSILE TEST - HOT MOLD

| Example | Modulus (PSI) | Yield Stress (PSI) | Elongation at Yield (%) | Break Stress (PSI) | Elongation at Break (%) |
|---|---|---|---|---|---|
| 3 | 295316.9 | 6352.8 | 2.0 | 5081.6 | 29.5 |
| 4 | 268593.6 | 6669.5 | 2.4 | 5445.4 | 31.3 |
| 5 | 261335.4 | 6652.1 | 2.2 | 5490.7 | 57.9 |
| 6 | 414058.4 | 6294.6 | 1.5 | 5053.9 | 40.8 |
| 7 | 272299.0 | 7380.6 | 2.5 | 4629.2 | 82.8 |
| 8 | 332033.6 | 6464.4 | 1.7 | 5155.2 | 59.4 |
| 9 | 304680.9 | 6437.5 | 1.5 | 5108.8 | 57.6 |
| 10 | 307361.1 | 6567.2 | 1.6 | 5180.3 | 59.6 |
| 11 | 298141.4 | 7657.9 | 2.7 | 6141.0 | 62.4 |
| 12 | 307076.8 | 7934.2 | 2.6 | 6211.7 | 62.5 |
| Comparative | 426853.0 | 8378.2 | 1.4 | 8152.2 | 1.7 |

### THREE-POINT FLEXURAL TEST

Testing was conducted on an MTS Sintech 2/S unit with Test Works software using the principles of ASTM D 790, Procedure A - Flexural Properties of Unreinforced and Reinforced Plastics and Electrical Insulating Materials, Procedure A.
Strain Rate: 0.05 in/min
Cross-Head Speed:
   Samples Size: 0.125" thickness x 0.5: width x 5.0" length
   Support Span: 2 inches

| Example | Flex Modulus (PSI) (Cold Mold) | Peak Stress (PSI) (Cold Mold) | Flex Modulus (PSI) (Hot Mold) | Peak Stress (PSI) (Hot Mold) |
|---|---|---|---|---|
| 3 | 446557.7 | 9374.0 | 524052.8 | 10556.0 |
| 4 | 433054.8 | 9289.2 | 536573.4 | 10969.0 |
| 5 | 440716.4 | 9369.0 | 534575.5 | 10906.0 |
| 6 | 447814.9 | 9311.0 | 521061.7 | 10505.0 |
| 7 | 437163.3 | 9285.0 | 470312.7 | 9489.0 |
| 8 | 442526.1 | 9199.0 | 509443.8 | 10447.0 |
| 9 | 447664.3 | 9212.0 | 522260.0 | 10603.0 |
| 10 | 453051.7 | 9447.0 | 519181.2 | 10636.0 |
| 11 | 445161.9 | 9519.0 | 533239.4 | 11010.0 |
| 12 | 447289.1 | 9821.0 | 541885.2 | 11311.0 |
| Comparative | 455113.9 | 13111.0 | 549786.9 | 13168.0 |

### NOTCHED IZOD IMPACT TEST (Cold Mold)

Testing was conducted on a Ceast Resil 25 Digital Pendulum Unit, Model 6545 per ASTM D 256: Standard Test Methods for Determining the Izod Pendulum Impact Resistance of Plastics, Method A.
Pendulum Capacity: 2.75 Joule
Notch Depth: 0.1 in
Test Temperature: Samples were at room temperature 22°C during testing.

| Example | Energy Absorbed (J) | Impact Resistance (J/M) | Impact Resistance (ftlb/in) |
|---|---|---|---|
| 3 | .227 | 54.6 | 1.0 |
| 4 | .237 | 57.7 | 1.1 |
| 5 | .258 | 64.3 | 1.2 |
| 6 | .234 | 56.6 | 1.1 |
| 7 | .186 | 41.4 | 0.8 |
| 8 | .231 | 55.6 | 1.0 |
| 9 | .224 | 53.5 | 1.0 |
| 10 | .207 | 48.0 | 0.9 |
| 11 | .222 | 52.8 | 1.0 |
| 12 | .201 | 46.2 | 0.9 |
| Comparative | .194 | 43.9 | 0.8 |

### NOTCHED IZOD IMPACT TEST (Hot Mold)

| Example | Energy Absorbed (J) | Impact Resistance (J/M) | Impact Resistance (ftlb/in) |
|---|---|---|---|
| 3 | .247 | 61.6 | 1.2 |
| 4 | .300 | 78.5 | 1.5 |
| 5 | .570 | 164.9 | 3.1 |
| 6 | .362 | 98.3 | 1.8 |
| 7 | .205 | 48.2 | 0.9 |
| 8 | .383 | 105.0 | 2.0 |
| 9 | .460 | 129.7 | 2.4 |
| 10 | .490 | 139.6 | 2.6 |
| 11 | .515 | 147.3 | 2.8 |
| 12 | .432 | 120.8 | 2.3 |
| Comparative | .222 | 53.5 | 1.0 |

Having thus described certain embodiments of the present invention, it is to be understood that the invention defined by the appended claims is not to be limited by particular details set forth in the above description .

## Claims

1. An extrudable PLA composition comprising:
a) polylactic acid; and
b) a bicomponent fiber comprising HDPE or a naturally-derived PLA as a low melt temperature component, and a 100% bioPET, 100% PDLA, 100% PLLA or a stereocomplex PLA composition as a high melt temperature component, wherein the bicomponent fiber has an island-in-the-sea construction with the sea being the low melt temperature component and the island being the high melt temperature component.

2. The extrudable PLA composition according to Claim 1, wherein the stereocomplex PLA composition is a 50/50 blend of 100% PDLA and 100% PLLA.

3. The extrudable PLA composition according to Claim 2, further comprising one or more components comprising cyclodextrin, nanofibers, a natural oil, fatty acid, fatty acid ester, wax or waxy ester, a crystallinity agent, a starch-based rheology agent and/or a gloss agent.

4. The extrudable PLA composition of Claim 3, wherein the moisture level is less than 0.02 wt% of water.

5. The extrudable PLA composition of Claim 1, further comprising an additive selected from the group consisting of additional plasticizers, impact modifiers, additional fiber reinforcement, antioxidants, antimicrobials, fillers, UV stabilizers, colorants, glass transition temperature modifiers, melt temperature modifiers and heat deflection temperature modifiers.

6. An extrudable PLA composition as claimed in claim 1, having a heat deflection temperature of greater than 52°C and a melt temperature between 153°C and 230°C, wherein the extrudable PLA composition comprises:
a) 60 to 99.8 wt% polylactic acid;
b) 0.1 to 15 wt% bicomponent fiber comprising an island-in-the-sea structure wherein 0.1 to 80 wt% high density polyethylene is the sea and 0.1 to 80 wt% stereocomplex polylactic acid is the island;
c) 0 to 8 wt% cyclodextrin;
d) 0.1 to 8 wt% natural oil, fatty acid, fatty acid ester, wax or waxy ester;
e) 0.0 to 5 wt% nanofibers;
f) 0.0 to 10 wt% crystallinity agent;
g) 0.0 to 5 wt% gloss agent; and
h) 0.0 to 5 wt % starch-based rheology agent,
wherein the heat deflection temperature is measured according to the method described in paragraph [0087].

7. An extrudable PLA composition as claimed in claim 2, wherein the bicomponent fiber comprises HDPE as the low melt temperature component.

8. The extrudable PLA composition of Claim 7, further comprising one or more components comprising cyclodextrin, nanofibers, a natural oil, fatty acid, fatty acid ester, wax or waxy ester, a crystallinity agent, a starch-based rheology agent and/or a gloss agent.

9. The extrudable PLA composition of Claim 7, further comprising an additive selected from the group consisting of additional plasticizers, impact modifiers, additional fiber reinforcement, antioxidants, antimicrobials, fillers, UV stabilizers, colorants, glass transition temperature modifiers, melt temperature modifiers and heat deflection temperature modifiers.

10. An article of manufacture formed from the extrudable PLA composition according to claim 1, claim 6 or claim 7.

11. The article of manufacture according to claim 10, wherein the article of manufacture is selected from the group consisting of a bottle, lid, cap, closure, container, package and canister.

12. The article of manufacture according to claim 10, wherein article of manufacture is a container.

## Patentansprüche

1. Extrudierbare PLA-Zusammensetzung, umfassend:
a) Polymilchsäure; und
b) eine Zweikomponentenfaser umfassend HDPE oder ein PLA natürlicher Herkunft als eine Komponente mit niedriger Schmelztemperatur und eine 100% Bio-PET, 100% PDLA, 100% PLLA oder eine stereokomplexe PLA-Zusammensetzung als eine Komponente mit hoher Schmelztemperatur, wobei die Bikomponentenfaser eine Insel-im-Meer-Struktur aufweist, wobei die Komponente mit niedriger Schmelztemperatur das Meer ist und die Komponente mit hoher Schmelztemperatur die Insel ist.

2. Extrudierbare PLA-Zusammensetzung nach Anspruch 1, wobei die stereokomplexe PLA-Zusammensetzung ein 50/50-Blend von 100% PDLA und 100% PLLA ist.

3. Extrudierbare PLA-Zusammensetzung nach Anspruch 2, ferner umfassend eine oder mehrere Komponenten, die Cyclodextrin, Nanofasern, ein natürliches Öl, Fettsäure, Fettsäureester, Wachs oder Wachsester, ein Kristallinitätsmittel, ein Rheologiemittel auf Stärkebasis und/oder ein Glanzmittel umfasst.

4. Extrudierbare PLA-Zusammensetzung nach Anspruch 3, wobei der Feuchtigkeitsgehalt weniger als 0,02 Gew.-% Wasser beträgt.

5. Extrudierbare PLA-Zusammensetzung nach Anspruch 1, ferner umfassend ein Additiv, das ausgewählt ist aus der Gruppe bestehend aus zusätzlichen Weichmachern, Schlagzähigkeitsverbesserern, zusätzlicher Faserverstärkung, Antioxidationsmitteln, antimikrobiellen Mitteln, Füllstoffen, UV-Stabilisatoren, Farbstoffen, Modifiziermitteln für die Glasübergangstemperatur, Modifiziermitteln für die Schmelztemperatur und Modifiziermitteln für die Wärmestandfestigkeit.

6. Extrudierbare PLA-Zusammensetzung nach Anspruch 1, die eine Wärmestandfestigkeit größer als 52°C und eine Schmelztemperatur zwischen 153°C und 230°C aufweist, wobei die extrudierbare PLA-Zusammensetzung umfasst:
a) 60 bis 99,8 Gew.-% Polymilchsäure;
b) 0,1 bis 15 Gew.-% Bikomponentenfaser, umfassend eine Insel-im-Meer-Struktur, wobei 0,1 bis 80 Gew.-% Polyethylen hoher Dichte das Meer sind und 0,1 bis 80 Gew.-% stereokomplexe Polymilchsäure die Insel sind;
c) 0 bis 8 Gew.-% Cyclodextrin;
d) 0,1 bis 8 Gew.-% natürliches Öl, Fettsäure, Fettsäureester, Wachs oder Wachsester;
e) 0,0 bis 5 Gew.-% Nanofasern;
f) 0,0 bis 10% Gew.-% Kristallinitätsmittel;
g) 0,0 bis 5 Gew.-% Glanzmittel; und
h) 0,0 bis 5 Gew.-% Rheologiemittel auf Stärkebasis,
wobei die Wärmestandfestigkeit entsprechend der in Paragraph [0087] beschriebenen Methode gemessen wird.

7. Extrudierbare PLA-Zusammensetzung nach Anspruch 2, wobei die Bikomponentenfaser als die Komponente mit niedriger Schmelztemperatur HDPE umfasst.

8. Extrudierbare PLA-Zusammensetzung nach Anspruch 7, ferner umfassend eine oder mehrere Komponenten, die Cyclodextrin, Nanofasern, ein natürliches Öl, Fettsäure, Fettsäureester, Wachs oder Wachsester, ein Kristallinitätsmittel, ein Rheologiemittel auf Stärkebasis und/oder ein Glanzmittel umfasst.

9. Extrudierbare PLA-Zusammensetzung nach Anspruch 7, ferner umfassend ein Additiv, das ausgewählt ist aus der Gruppe bestehend aus zusätzlichen Weichmachern, Schlagzähigkeitsverbesserern, zusätzlicher Faserverstärkung, Antioxidationsmitteln, antimikrobiellen Mitteln, Füllstoffen, UV-Stabilisatoren, Farbstoffen, Modifiziermitteln für die Glasübergangstemperatur, Modifiziermitteln für die Schmelztemperatur und Modifiziermitteln für die Wärmestandfestigkeit.

10. Herstellungsgegenstand, der aus der extrudierbaren PLA-Zusammensetzung nach Anspruch 1, Anspruch 6 oder Anspruch 7 gebildet wird.

11. Herstellungsgegenstand nach Anspruch 10, wobei der Herstellungsgegenstand ausgewählt ist aus der Gruppe bestehend aus einer Flasche, einem Deckel, einer Kappe, einem Verschluss, Behälter, einer Verpackung und einem Kanister.

12. Herstellungsgegenstand nach Anspruch 10, wobei der Herstellungsgegenstand ein Behälter ist.

## Revendications

1. Composition de PLA extrudable comprenant :
a) de l'acide polylactique ; et
b) une fibre à deux composants qui comprend du HDPE ou du PLA dérivé naturellement en tant que composant à température de fusion faible et un bioPET à 100%, du PDLA à 100%, du PLLA à 100% ou une composition de PLA stéréocomplexe en tant que composant à température de fusion élevée, dans laquelle la fibre à deux composants présente une construction du type île dans la mer dans laquelle la mer est le composant à température de fusion faible et l'île est le composant à température de fusion élevée.

2. Composition de PLA extrudable selon la revendication 1, dans laquelle la composition de PLA stéréocomplexe est un mélange à 50/50 de PDLA à 100% et de PLLA à 100%.

3. Composition de PLA extrudable selon la revendication 2, comprenant en outre un ou plusieurs composants comprenant la cyclodextrine, les nanofibres, une huile naturelle, un acide gras, un ester d'acide gras, une cire ou un ester cireux, un agent de cristallinité, un agent de rhéologie à base d'amidon et/ou un agent de brillance.

4. Composition de PLA extrudable selon la revendication 3, dans laquelle le niveau d'humidité est inférieur à 0,02 % en poids d'eau.

5. Composition de PLA extrudable selon la revendication 1, comprenant en outre un additif qui est sélectionné parmi le groupe qui est constitué par des plastifiants additionnels, des agents de modification d'impact, un agent de renforcement de fibre additionnel, des antioxydants, des antimicrobiens, des agents de remplissage, des agents de stabilisation UV, des colorants, des agents de modification de température de transition vitreuse, des agents de modification de température de fusion et des agents de modification de température de déformation à chaud.

6. Composition de PLA extrudable selon la revendication 1, présentant une température de déformation à chaud supérieure à 52°C et une température de fusion entre 153°C et 230°C, dans laquelle la composition de PLA extrudable comprend :
a) de 60 à 99,8 % en poids d'acide polylactique ;
b) de 0,1 à 15 % en poids d'une fibre à deux composants qui comprend une structure du type île dans la mer dans laquelle la mer est constituée par de 0,1 à 80 % en poids de polyéthylène haute densité et l'île est constituée par de 0,1 à 80 % en poids d'acide polylactique stéréocomplexe ;
c) de 0 à 8 % en poids de cyclodextrine ;
d) de 0,1 à 8 % en poids d'huile naturelle, d'acide gras, d'ester d'acide gras ou d'ester cireux ;
e) de 0,0 à 5 % en poids de nanofibres ;
f) de 0,0 à 10 % en poids d'agent de cristallinité ;
g) de 0,0 à 5 % en poids d'agent de brillance ; et
h) de 0,0 à 5 % en poids d'agent de rhéologie à base d'amidon ;
dans laquelle la température de déformation à chaud est mesurée conformément au procédé qui est décrit au paragraphe [0087].

7. Composition de PLA extrudable selon la revendication 2, dans laquelle la fibre à deux composants comprend du HDPE en tant que composant à température de fusion faible.

8. Composition de PLA extrudable selon la revendication 7, comprenant en outre un ou plusieurs composants comprenant la cyclodextrine, les nanofibres, une huile naturelle, un acide gras, un ester d'acide gras, une cire ou un ester cireux, un agent de cristallinité, un agent de rhéologie à base d'amidon et/ou un agent de brillance.

9. Composition de PLA extrudable selon la revendication 7, comprenant en outre un additif qui est sélectionné parmi le groupe qui est constitué par des plastifiants additionnels, des agents de modification d'impact, un agent de renforcement de fibre additionnel, des antioxydants, des antimicrobiens, des agents de remplissage, des agents de stabilisation UV, des colorants, des agents de modification de température de transition vitreuse, des agents de modification de température de fusion et des agents de modification de température de déformation à chaud.

10. Article de fabrication formé à partir de la composition de PLA extrudable selon la revendication 1, la revendication 6 ou la revendication 7.

11. Article de fabrication selon la revendication 10, dans lequel l'article de fabrication est sélectionné parmi le groupe qui est constitué par une bouteille, un couvercle, un capuchon, un moyen de fermeture, un moyen de contenance, un emballage et une cartouche.

12. Article de fabrication selon la revendication 10, dans lequel l'article de fabrication est un moyen de contenance.
